# DEMANDE DE BREVET EUROPEEN

(11) **EP 0 868 958 A1**
(43) Date de publication de la demande: **07.10.1998**
(21) Numéro de dépôt: 98400792.2
(22) Date de dépôt: 03.04.1998
(51) Int. Cl.: B23K 3/06

(54) **Procédé de fabrication en continu d'une bande métallique à brasure incorporée, bande obtenue par ce procédé, et pièce de contact découpée dans cette bande**

(30) Priorité: 04.04.1997 FR 9704124
(71) Demandeur: Proner Comatel, 93160 Noisy-Le-Grand (FR)
(72) Inventeur: Raimond, Gérard, 92120 Montrouge (FR); Arnoul, François, 94520 Perigny-Sur-Yerres (FR); Chevalier, Bernard, 73190 Saint Baldoph (FR)
(74) Mandataire: Laget, Jean-Loup

(57) **Abrégé**

Procédé de fabrication en continu d'une bande métallique à brasure incorporée, notamment pour constituer des pièces de contact, caractérisé par les étapes consistant à :
- prévoir une bande métallique (1) comportant au moins une rainure longitudinale (2) sur au moins l'une de ses faces,
- prévoir une buse (6) de sortie de brasure à l'état fondu,
- faire défiler la bande métallique avec sa rainure longitudinale sous la buse de sortie (6), dans une atmosphère inerte (15),
- déposer dans la rainure, la brasure à l'état fondu.

## Description

L'invention concerne un procédé de fabrication en continu d'une bande métallique à brasure incorporée, notamment pour constituer des pièces de contact, la bande obtenue par ce procédé et une pièce de contact obtenue par découpage de cette bande.

Les pièces de contact, notamment en technique de connexion électrique de petites dimensions, sont avantageusement découpées dans une bande métallique. Pour assurer un contact électrique de qualité, les pièces de contact sont munies d'une brasure dans la zone du contact électrique. Pour constituer des bandes métalliques à brasure incorporée, il a été proposé de superposer une bande métallique et une bande de brasure, et de procéder à un colaminage à froid. Cette méthode introduit dans la bande résultante des contraintes mécaniques qui se libèrent au moment du découpage de la bande en pièces de contact. Il peut en résulter une déformation de la pièce de contact, ou une orientation ou un décollement de la brasure, qui affectent le fonctionnement automatisé d'une chaîne de fabrication.

Il a été proposé de déposer une bande de brasure dans une rainure fraisée dans une bande métallique, et de chauffer ensuite la bande métallique au point de faire fondre la brasure qui se répartit dans la rainure. Cette méthode se révèle particulièrement lente, et donc onéreuse.

Il a été proposé de tremper une bande métallique dans de la brasure liquide, c'est-à-dire de faire un étamage à chaud. Cette technique est plus rapide mais elle ne permet pas de remplir la rainure.

L'un des buts de l'invention est de proposer un procédé de réalisation d'une bande métallique à brasure incorporée, qui assure une bonne liaison entre la brasure et la bande métallique, ainsi qu'une bonne stabilité des pièces de contact découpées, notamment dans leur utilisation dans la technique des composants montés en surface (CMS).

Un autre but de l'invention est de proposer un tel procédé, qui soit économiquement satisfaisant, c'est-à-dire qui assure une vitesse élevée de réalisation, tout en permettant d'avoir une surépaisseur de brasure au dessus de la rainure de la bande métallique.

Encore un autre but de l'invention est de proposer un procédé qui permette de calibrer et de réguler le dépôt de brasure sur la bande, notamment en fonction de la température de la bande et de la brasure, de la vitesse de défilement de la bande et du débit de sortie de la brasure.

L'invention a pour objet un procédé de fabrication en continu d'une bande métallique à brasure incorporée, notamment pour constituer des pièces de contact, caractérisé par les étapes consistant à :
- prévoir une bande métallique comportant au moins une rainure longitudinale sur au moins l'une de ses faces,
- prévoir une buse de sortie de brasure à l'état fondu,
- faire défiler la bande métallique avec sa rainure longitudinale sous la buse de sortie dans une atmosphère inerte,
- déposer dans la rainure, la brasure à l'état fondu.

Selon d'autres caractéristiques :
- la bande métallique comportant une rainure longitudinale est chauffée avant de déposer la brasure à l'état fondu dans la rainure;
- la bande métallique comporte une rainure obtenue par enlèvement de métal;
- la bande métallique comporte une rainure obtenue par déformation de la bande;
- la brasure est déposée dans la rainure longitudinale avec une surépaisseur, de préférence comprise entre 0 et 0,02mm;
- la buse de sortie est alimentée en brasure liquide par un réservoir à atmosphère inerte sous l'action de la gravité ou sous pression régulée;
- la buse de sortie est alimentée en brasure par une extrudeuse à vis à débit régulé;
- le débit de sortie de la brasure est asservi à la vitesse de défilement de la bande et à la température de la brasure de la bande pour réguler le dépôt de la brasure;
- le dépôt de la brasure est calibré par le profil d'un embout interchangeable de la buse de sortie;
- la buse de sortie est équipée d'un obturateur commandé pour interrompre le dépôt de la brasure lors de la détection d'un défaut en aval et permettre un nouveau passage de la bande sous la buse.

L'invention a également pour objet une bande métallique à brasure incorporée obtenue par le procédé ci-dessus.

L'invention couvre également les pièces de contact obtenues par découpage d'une bande métallique à brasure incorporée obtenue par le procédé ci-dessus.

D'autres caractéristiques ressortent de la description qui suit faite avec référence aux dessins annexés dans lesquels :
- la figure 1 est une vue schématique en perspective d'une installation de réalisation d'une bande métallique à brasure incorporée mettant en oeuvre le procédé selon l'invention ;
- la figure 2 est une vue en coupe transversale d'un premier mode de réalisation d'une bande métallique à brasure incorporée, réalisée suivant le procédé de l'invention ;
- la figure 3 est une vue en coupe transversale d'un deuxième mode de réalisation par déformation de la bande, d'une bande métallique à brasure incorporée, réalisée suivant le procédé de l'invention, avant le dépôt de la brasure;
- la figure 4 est une en perspective d'une bobine de bande métallique à brasure incorporée obtenue par le procédé de l'invention;
- la figure 5 est une vue partielle et en coupe suivant la ligne V - V de la figure 6, représentant la tête d'une extrudeuse utilisée dans une variante du procédé de l'invention;
- la figure 6 est une vue en coupe suivant la ligne VI-VI de la figure 5; et
- la figure 7 est un schéma synoptique fonctionnel de la cinématique du procédé de l'invention.

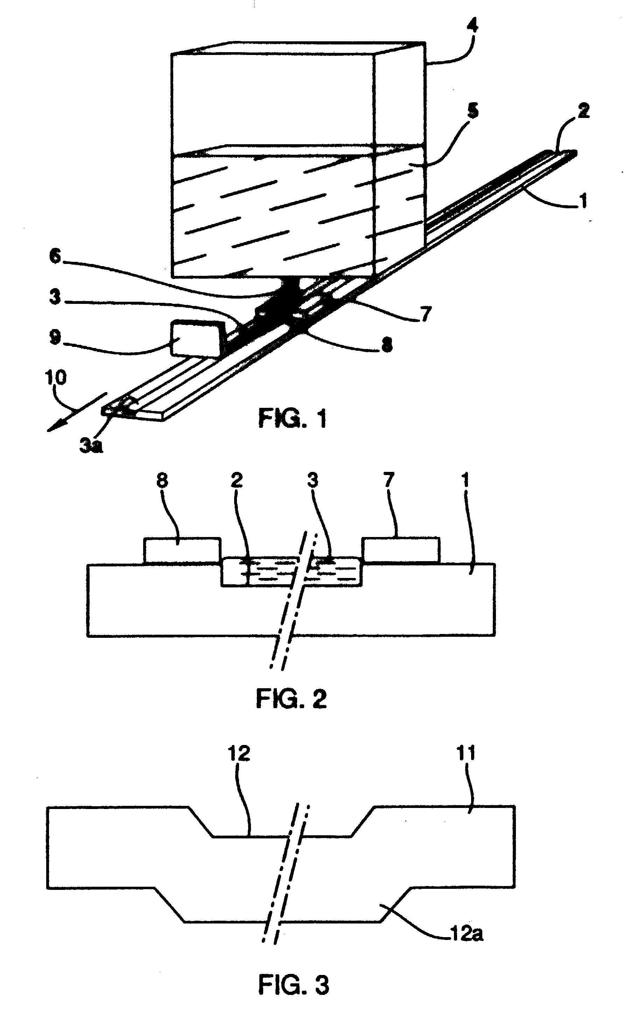

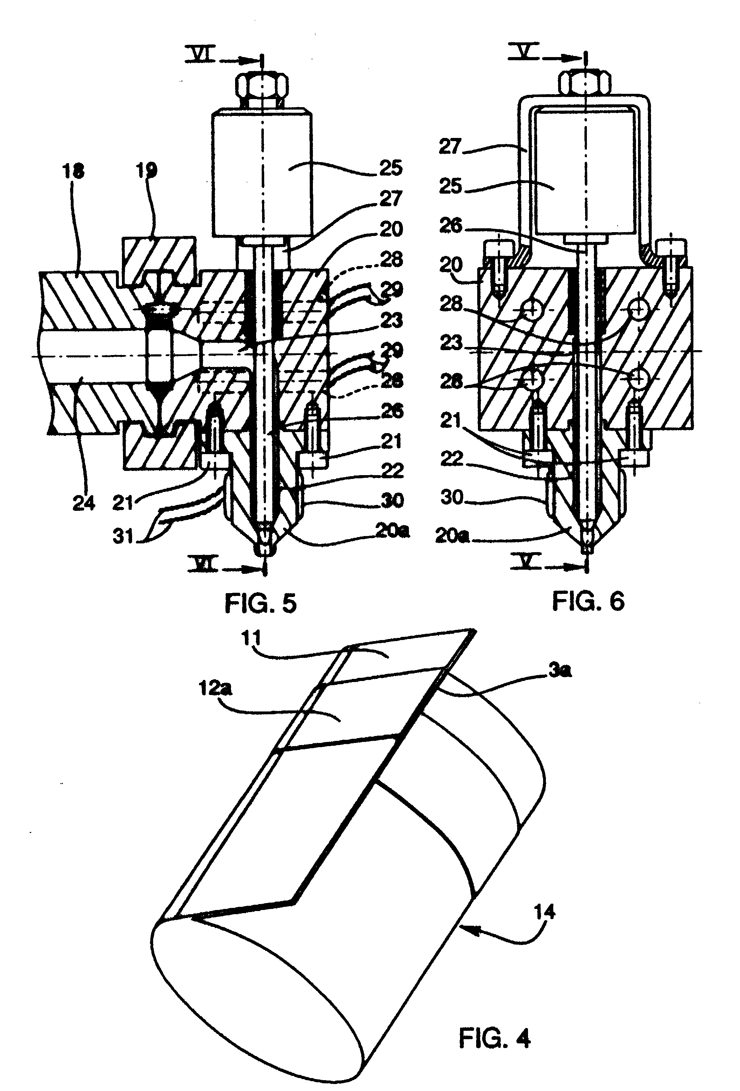

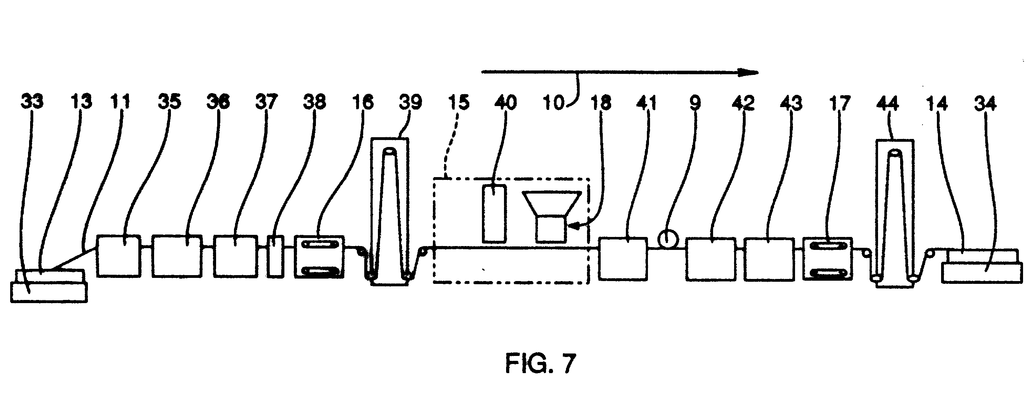

Sur la figure 1, une bande métallique 1 est munie d'une rainure longitudinale 2. La rainure 2 est obtenue par fraisage ou par enlèvement d'un copeau en continu, par exemple. La bande 1 est avantageusement déroulée d'une bobine 13 et enroulée sur une autre bobine 14 (voir figures 4 et 7). Entre les deux bobines, elle se déplace longitudinalement, sur un parcours sensiblement rectiligne, en restant sensiblement horizontale, la rainure 2 étant disposée sur le dessus, de façon à pouvoir recevoir un dépôt de brasure 3.

Au dessus de la bande 1 est disposé un réservoir 4 contenant de la brasure 5 maintenue à l'état fondu. Cette brasure liquide est susceptible d'être déposée, par exemple par gravité, par l'intermédiaire d'une buse 6, dans la rainure 2 de la bande 1 qui défile sous la buse 6. De part et d'autre de la buse 6 sont prévus deux guides 7 et 8, par exemple en acier inoxydable, pour assurer le confinement de la brasure liquide dans la rainure 2, et éviter les débordements tout en permettant une surépaisseur de brasure.

Les deux guides 7 et 8 sont suffisamment longs pour permettre à la brasure 3 d'avoir une forme stable à la sortie des guides. En aval des guides 7 et 8, est disposé un couteau racleur 9 pour assurer une épaisseur constante à la brasure 3. En aval du racleur 9, la bande 1, qui se déplace dans le sens de la flèche 10, se présente avec sa rainure 2 remplie de brasure 3a d'épaisseur constante, cette épaisseur étant légèrement supérieure à la profondeur de la rainure 2.

La figure 2 est une vue en coupe transversale au droit de la sortie des guides 7 et 8 de la figure 1. Dans ce premier mode de réalisation de l'invention, la rainure 2 est constituée par enlèvement de métal en continu sur la partie supérieure de la bande 1. Les guides 7 et 8 sont placés de part et d'autre de la rainure 2. La brasure 3 a une épaisseur légèrement supérieure à la profondeur de la rainure 2. Ainsi sont assurés lors de l'utilisation ultérieure de la bande, le maintien mécanique de la bande lors de son découpage, et le volume nécessaire de brasure.

A titre d'exemple de réalisation, la largeur de la rainure 2 est de 4mm, l'épaisseur de la bande 1 est de 0,25mm, la profondeur de la rainure 2 est de 0,10mm, et la surépaisseur de la brasure 3 est comprise entre 0 et environ 0,02mm. Les guides 7 et 8 sont par exemple espacés de la bande 1 d'un jeu de l'ordre de 0,01mm.

Sur la figure 3, la rainure 12 n'est pas obtenue par enlèvement de métal en continu, mais par déformation de la bande 11, par profilage à froid par exemple. Ainsi, la bande 11 présente sur sa face opposée à la rainure de section tronconique 12 une protubérance complémentaire 12a.

La bande 1, 11 est de préférence en alliage cuivreux étamé à chaud, c'est-à-dire dont la surface, recouverte de quelques micromètres d'étain, est propre.

Le réservoir 4 de brasure liquide 5 est sous atmosphère inerte, par exemple sous azote, et sous pression régulée, de façon à contrôler le débit de la buse de sortie 6. Le réservoir 4 est de préférence clos en atmosphère inerte pour éviter toute oxydation de l'étain. De préférence, la sortie de la brasure par la buse 6 se fait à débit régulé. Mais, le débit de sortie de la brasure et la vitesse de défilement de la bande 1 sous la buse 6 peuvent être asservis.

La brasure peut être constituée d'étain pur ou de différents types d'alliages de brasure, correspondant à différentes gammes de température de refusion.

Le dépôt de brasure liquide par la buse 6 est effectué sous atmosphère inerte, c'est-à-dire par exemple dans une enceinte sous azote 15 (voir figure 7). En amont et en aval de cette enceinte 15, la bande 1 est entraînée par des jeux de rouleaux 16 et 17 respectivement.

Ces jeux de rouleaux 16 et 17 sont de préférence alimentés en courant électrique par un générateur à basse tension, de façon à assurer un chauffage de la bande entre les jeux de rouleaux, par exemple par effet Joule. La régulation de la température de la bande 1,11 est assurée par exemple en utilisant un détecteur de rayonnement infra-rouge ou une sonde pyrométrique placé au voisinage de la buse 6. La plage de réglage de la température est comprise par exemple entre 0 et 180°C. Il est en effet nécessaire de contrôler l'écart de température entre la bande 1,11 d'une part et la brasure liquide déposée par la buse 6 d'autre part. De plus, à la sortie des guides 7 et 8, la brasure 3 ne doit plus être liquide mais solide. La vitesse de déplacement de la bande 1,11 sous la buse 6 est régulée de telle sorte que la brasure 3 présente une surépaisseur par rapport à la profondeur de la rainure 2,12. Cette surépaisseur est limitée par le racleur 9.

La mise en oeuvre du procédé selon l'invention permet la réalisation d'une bande à brasure incorporée avec une vitesse de l'ordre de 10m/mn.

L'exemple de réalisation décrit et représenté comporte une seule rainure sur la bande métallique, correspondant à un seul dépôt de brasure, mais la bande métallique peut présenter plusieurs rainures susceptibles de recevoir de la brasure. Lorsque les rainures sont sur la même face de la bande métallique, les dépôts de brasure peuvent être simultanés ou décalés. Lorsque les rainures sont sur des faces opposées de la bande métallique, les dépôts de brasure sont effectués successivement.

En se référant maintenant aux figures 5 à 7, une variante de réalisation de l'invention va être décrite. Afin d'améliorer la régularité du dépôt d'étain en continu, le réservoir 4 contenant l'étain liquide 5 est remplacé par une extrudeuse à double vis 18 dont le profil est adapté à l'étain liquide.

Comme visible sur la figure 5, la tête de l'extrudeuse 18 est reliée par une bride de raccordement 19 à une buse 20. Cette buse 20 présente à son extrémité inférieure un embout de buse 20a qui est fixé de manière amovible par des vis de serrage 21 au corps de buse 20. L'embout de buse 20a est interchangeable et présente un passage interne 22 à profil adapté en fonction des applications envisagées. Ce passage interne 22 communique avec un passage coudé 23 à l'intérieur du corps de buse 20, lequel passage coudé 23 communique à son tour avec le passage interne 24 de la tête de l'extrudeuse 18.

Le corps de buse 20 supporte un électro-aimant 25 ou un vérin (non représenté) qui actionne un obturateur en forme de tige-pointeau 26, pour autoriser ou arrêter le débit d'étain s'écoulant par l'embout de buse 20a. Cette tige-pointeau 26 traverse le passage coudé 23 et le passage interne 22 de l'embout 20a. L'électro-aimant 25 est retenu sur le corps de buse 20 par l'intermédiaire d'un étrier 27 en forme de U.

L'extrudeuse comporte plusieurs zones régulées de chauffage, de façon à obtenir au niveau de la tête de l'extrudeuse de l'étain liquide en partant au niveau d'une tremis d'entrée avec des granulés d'étain, ce qui évite toute oxydation de l'étain liquide.

En outre, le corps de buse 20 comporte quatre cartouches chauffantes 28 qui entourent le passage coudé 23 du corps de buse 20 pour permettre la régulation de température de l'étain au niveau de la buse. Des conducteurs électriques 29 sont reliés aux cartouches 28 pour leur alimentation électrique. De manière analogue, un collier chauffant 30 est emmanché sur l'embout 20a et connecté à des liaisons électriques 31 pour réguler la température au niveau de l'embout de buse 20a.

Comme visible sur la figure 5, la buse est orientée dans une direction sensiblement perpendiculaire au fourreau de l'extrudeuse. Ainsi, le dépôt d'étain peut être régulé en fonction de la vitesse de défilement de la bande, de la température de l'étain et de la température de la bande. L'extrudeuse est asservie à ces paramètres.

Sur la figure 7, le procédé de fabrication en continu de la bande métallique à brasure incorporée est décrit de façon plus détaillée.

Chacune des bobines 13 et 14 est portée par une palette respective 33,34. Les palettes 33 et 34 servent respectivement comme dérouleur et comme enrouleur de bobine. La bande métallique 11 passe d'abord à travers un bloc de formage 35 à galets amovibles, puis par un bloc de redressage 36 également à galets amovibles, ensuite il passe à travers un module de nettoyage 37 à eau chaude sous pression, suivi d'un module de séchage 38, de manière classique dans la technique.

En aval du premier jeu de rouleaux d'entrainement 16 est prévu un accumulateur 39 pour permettre le retour de la bande en cas de constatation d'un défaut, comme expliqué plus loin. Après l'accumulateur 39, on retrouve l'enceinte 15 précitée qui contient l'extrudeuse 18 sous une atmosphère inerte, ainsi qu'une pompe de fluxage par pulvérisation 40. Puis, la bande 11 sur laquelle a été déposé l'étain liquide passe à travers un module de refroidissement à eau 41 avant que l'excès de surépaisseur d'étain soit usiné par le racleur 9. Au niveau du racleur 9, le surplus d'étain est récupéré en vue de son recyclage.

Ensuite, l'état de la brasure en étain est inspecté en 42 puis, on procède à un nettoyage par eau chaude sous pression en 43 avant de passer par le second jeu de rouleaux d'entraînement 17. Entre les rouleaux 17 et la bobine finale 14 est intercalé un second accumulateur 44 similaire à l'accumulateur 39 précité.

Lorsqu'un défaut de la bande, à savoir une insuffisance de dépôt d'étain dans la rainure, est constaté en 42, il est nécessaire de faire passer la bande à nouveau sous la buse de l'extrudeuse 18, sans pour autant interrompre le processus de fabrication en continu. On utilise à cet effet les deux accumulateurs 39 et 44 qui permettent de faire reculer la partie défectueuse de la bande jusqu'au droit de la buse d'extrudeuse 18 pour effectuer un dépôt sélectif d'étain dans les zones défectueuses, sans affecter le fonctionnement des enrouleurs des bobines 13 et 14. Puis, le procédé reprend son cours normal en faisant avancer la bande jusqu'à sa position précédente. Sur la figure 7, les accumulateurs 39 et 44 comprennent des rouleaux déplaçables à renvoi d'angle. Les entraîneurs 16 et 17 peuvent être en variante du type à bande sans fin.

Bien entendu, l'invention n'est pas limitée au dépôt d'étain, mais peut s'appliquer également à tout matériau déposé en phase liquide sur la bande.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de fabrication en continu d'une bande métallique à brasure incorporée, notamment pour constituer des pièces de contact, caractérisé par les étapes consistant à :
- prévoir une bande métallique (1,11) comportant au moins une rainure longitudinale (2,12) sur au moins l'une de ses faces,
- prévoir une buse (6,20) de sortie de brasure à l'état fondu,
- faire défiler la bande métallique avec sa rainure longitudinale sous la buse de sortie (6,20a), dans une atmosphère inerte (15),
- déposer dans la rainure, la brasure à l'état fondu.

2. Procédé selon la revendication 1, caractérisé en ce que la bande métallique comportant une rainure longitudinale est chauffée avant de déposer la brasure à l'état fondu dans la rainure.

3. Procédé selon la revendication 1, caractérisé en ce que la bande métallique (1) comporte une rainure (2) obtenue par enlèvement de métal.

4. Procédé selon la revendication 1, caractérisé en ce que la bande métallique (11) comporte une rainure (12) obtenue par déformation de la bande.

5. Procédé selon la revendication 1, caractérisé en ce que la brasure (3) est déposée dans la rainure longitudinale avec une surépaisseur, de préférence comprise entre 0 et 0,02mm.

6. Procédé selon la revendication 1, caractérisé en ce que la buse de sortie (6 )est alimentée en brasure liquide (5) par un réservoir à atmosphère inerte (4) sous l'action de la gravité ou sous pression régulée.

7. Procédé selon la revendication 1, caractérisé en ce que la buse de sortie (20) est alimentée en brasure par une extrudeuse à vis (18) à débit régulé.

8. Procédé selon la revendication 6 ou 7, caractérisé en ce que le débit de sortie de la brasure est asservi à la vitesse de défilement de la bande et à la température de la brasure de la bande pour réguler le dépôt de la brasure.

9. Procédé selon la revendication 1, caractérisé en ce que le dépôt de la brasure est calibré par le profil d'un embout interchangeable (20a) de la buse de sortie (20).

10. Procédé selon la revendication 1, caractérisé en ce qu'il consiste à équiper la buse de sortie (20) d'un obturateur commandé (25,26) pour interrompre le dépôt de la brasure lors de la détection d'un défaut en aval et permettre un nouveau passage de la bande sous la buse.

11. Bande métallique (1,11) à brasure incorporée (3a) obtenue par le procédé selon l'une des revendications 1 à 10.

12. Pièce de contact obtenue par découpage de la bande métallique (1,11) à brasure incorporée (3a) selon la revendication 11.
